# EUROPEAN PATENT SPECIFICATION

(11) **EP 3 622 866 B1**
(45) Date of publication and mention of the grant of the patent: **17.02.2021**
(21) Application number: 18193863.0
(22) Date of filing: 11.09.2018
(51) Int. Cl.: A47J 43/07

(54) **A DEVICE AND METHOD FOR AERATING A FOOD SUBSTANCE**
VORRICHTUNG UND VERFAHREN ZUR BELÜFTUNG EINER LEBENSMITTELSUBSTANZ
DISPOSITIF ET PROCÉDÉ D'AÉRATION DE SUBSTANCES ALIMENTAIRES

(43) Date of publication of application: 18.03.2020
(73) Proprietor: Holliday, Sander, 22303 Hamburg (DE)
(72) Inventor: Holliday, Sander, 22303 Hamburg (DE)
(74) Representative: Seemann & Partner Patentanwälte mbB

(56) References cited:
- US-A- 2 546 285
- US-A1- 2015 223 640

## Description

The invention relates to a device and method for aerating a food substance. The device comprises an aerator, a vessel, a drive unit and a mounting.

Devices for aerating are widely known in the art. The hand-held wire whip is the simplest in design. There are also devices powered by motors, some hand-held machines, some resting on a flat surface and having a fixed motor. Those devices are further divided into two classifications, namely those in which the rotation axis of the shaft remains fixed with relation to the device and those in which the axis of rotation moves in a planetary motion with respect to the motor.

There are devices which scrape the sides while mixing. Some have the exclusive function of scraping. Examples are known from US 5,791,777 (Chi Kin Mak - 1998) and US 6,932,503 (Fallowes - 2005), both of which are merely spatulas which provide a large drag on the motor without even any aerating or beating function.

But even those with elements which scrape while mixing often show no or poor aeration of the food substance. Examples are known from US 332,375 (Baltzley - 1885), US 2,546,285 (Wittmann - 1951), and US 2015/0223640 (Choy - 2015) where the elements are at the bottom of the vessel and they show closed loops.

Furthermore, there are some mixers which have elements which move outward with centrifugal force and have stiff paddles, which are not capable of scraping the edges. Examples of these are known from CA 2,329,851 (Wardberg - 2001) and US 7,441,940 (Vanek - 2008).

It is an object of the invention to provide an enhanced device and an enhanced method for aerating a food substance.

The object is solved by a device for aerating a food substance, comprising: an aerator, a vessel, a drive unit and a mounting, wherein
- the aerator comprises a plurality of filaments, the filaments being attached to the aerator at their proximal ends and being free at their distal ends, every filament having a first state and a second state, wherein the filament undergoes a reversible elastic deformation when being bent by a transverse force from the first state to the second state and wherein the filament performs a spring-back action from the second state to the first state, lowering the spring tension, when the transverse force acting on the filament drops to zero,
- the aerator is attachable to the drive unit and rotatable by the drive unit thereby defining an axis of rotation,
- the vessel defines a space for holding the food substance, the space being bordered at the sides by an inner wall of the vessel,
- the vessel and the drive unit are attachable to the mounting,
wherein the mounting defines a spatial relationship between the axis of rotation and the inner wall of the vessel such that the distal ends of a fraction of the filaments contact the inner wall of the vessel, wherein the inner wall bends the fraction of the filaments by applying the transverse force.

The device for aerating or beating food substances is particularly useful where beating vigorously at high speed is required. Flexible filaments extend from a rotatable central shaft assembly. The filaments are attached at the proximal end and are free at the distal end. Within the context of this specification, the "free ends" of the filaments are truly free ends of this member, which are opposite to their fixed end. In other words, a free end of a filament is not connected to any other member or device.

The filaments are long enough to come into contact with the side of the vessel holding the food at some point in their rotation. While a filament is in contact with the vessel, it scrapes the food touching the side. The filament bends, altering it from its state at rest. In other words, the filament transforms from the first state to the second state while being bent.

As the filament breaks contact with the wall of the vessel, it returns to its original state, i.e., the first state, and flings the food violently away to the opposite side. This combined scraping and flinging is what makes such beating different from what is currently known.

The flexible filaments are attached to a shaft unit rotating at high speed. A filament comes in contact with the inner surface of the vessel during part of the rotation, thus scraping food off the side. When the filament breaks contact with the inner surface of the vessel, it flings the food away as a result of centrifugal force and the elasticity of the filament. This scraping and flinging causes an aeration which is more rapid and more even throughout the food mass than with current devices or methods.

Because the filaments, especially at the free ends, are moving substantially in a plane orthogonal to the axis of the shaft, the food is pulled toward the free end by centrifugal force, increasing the mass at the end and thus making it more prone to be flung from the free end towards the wall of the vessel. The flinging is a result of both the centrifugal force and the force of elasticity brought into play when the filament goes from its bent state back to its free state.

In contrast to the invention, no prior art device can fling the food in a plane essentially orthogonal to the axis of the rotating shaft. There is no effect comparable to what the invention disclosed here does. No prior art device can scrape and fling the food substance the same way that a flexible filament can.

The primary advantages of the invention are threefold:
1) the change in shape of the filament from the bent form during the contact phase and the return to the free form upon leaving the vessel causes a stronger whipping action,
2) a filament not only cuts through the food substance, as does the beater or whip of a prior art device, but it also scrapes the side of the bowl, thus incorporating the more liquid portion clinging to the side of the bowl and ensuring a more even aeration throughout the mass of food,
3) a filament, being able to bend, is not constrained to the same radius from the axis of rotation as in the case of a stiff beater or whip and consequently has a greater path of travel through the food mass in a single revolution.

These advantages apply to both the fixed-axis and planetary models. Additionally, the filaments in the planetary model have an even higher perigee-to-apogee speed ratio at the free end of the filament than the most distal point on a stiff planetary whip, thus flinging the food away more energetically.

In another advantageous embodiment, the aerator comprises a shaft member and at least one appendage being detachably connected to the shaft member, the filaments being attached to the appendage.

This design renders the device very flexible since different appendages can be attached to the shaft member.

Furthermore, in an advantageous embodiment, the drive unit maintains the axis of rotation at a fixed position relative to the drive unit and, in particular, the mounting maintains the vessel and the drive unit in a fixed spatial relationship thereby maintaining the axis of rotation fixed in relation to the inner wall of the vessel. The vessel can be rotatable either by hand or by interaction (friction) with the aerator and the food substance. The vessel can be mounted displaceable within a certain range.

In other words, the aerator can be attached to a drive unit on a mounting such that the axis of the rotating aerator and the input shaft from the drive unit to which it is attached are co-axial. This embodiment shall also be referred to as a fixed-axis device. Relative to the mounting, the shaft axis remains fixed.

Alternately, the drive unit comprises an epicyclic gear train causing the axis of rotation to perform a circular movement on a cylinder jacket.

In other words, the aerator can be attached indirectly to the input shaft of the drive unit by an epicyclic gear, also referred to as a planetary gear system, in which the aerator is co-axial with the planet gear. The path of the shaft axis relative to the mounting is a cylinder. This configuration shall be referred to as a planetary device.

According to another embodiment, the aerator further comprises at least one splash guard filament being attached to the aerator at the proximal end and being free at the distal end, the splash guard filament having a length such that the free end constantly contacts the inner wall when the aerator is rotated about the axis of rotation and wherein the splash guard filament is arranged closer to an opening of the vessel in comparison to the filaments of the aerator thereby reducing splashing of the food substance through the opening.

The splash guard filament can be inclined with respect to the axis of rotation that is defined by the rotating shaft of the aerator. It is not necessary that the splash guard filament projects orthogonal to the rotating shaft. It can point downwards towards the interior of the vessel. Furthermore, a part of the splash guard filament can be fairly stiff. It can be stiff almost up to a point which is close to a minimum distance from the rotating shaft to the inner wall of the vessel.

The splash-reducing splash guard filament is very useful on the one hand and can be added to the device with low construction effort. Hence, the splash guard filament represents a very efficient measure for reduction of splashing.

The object is further solved by a method for aerating a food substance in a vessel defining a space for holding the food substance, the space being bordered at the sides by an inner wall of the vessel, wherein an aerator being attached to a drive unit is rotated by the drive unit about an axis of rotation, the aerator comprising a plurality of filaments, the filaments being attached to the aerator at their proximal ends and being free at their distal ends, every filament having a first state and a second state, wherein the filament undergoes a reversible elastic deformation when being bent by a transverse force from the first state to the second state and wherein the filament performs a spring-back action from the second state to the first state lowering the spring tension, when the transverse force acting on the filament drops to zero, the distal ends of the filaments temporarily contact the inner wall of the vessel during one rotation of the aerator about the axis of rotation, wherein during every rotation of the aerator, the distal end of every filament contacts the inner wall at a first rotational position of the aerator, on further rotation of the aerator, the inner wall applies the transverse force on the filament and bends the filament from the first state to the second state by reversible elastic deformation, the distal end of the filament scrapes along the inner wall of the vessel, and at a second point of rotation the transverse force applied by the inner wall on the filament drops to zero and the filament performs a spring-back action from the second state to the first state, lowering the spring tension.

The aerator can rotate about an axis of rotation that has a fixed spatial relationship relative to the inner wall of the vessel.

In another aspect, the aerator can rotate about an axis of rotation performing a circular movement on a cylinder jacket.

The cylinder jacket is co-axial with the vessel and with the sun pinion of the epicyclic gear.

Furthermore, the aerator can further comprise at least one splash guard filament being attached to the aerator at the proximal end and being free at the distal end, wherein the free end of the splash guard filament constantly contacts the inner wall when the aerator is rotated about the axis of rotation.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a simplified schematic view of a device for aerating a food substance,
- Fig. 2: an instantaneous view in a horizontal cross-sectional plane through a vessel in a device having a fixed axis and an aerator with three filaments in that plane,
- Fig. 3: a schematic illustration of the path of a single point on the whip of a planetary mixer according to the prior art, wherein the point is located very close to the vessel,
- Fig. 4a - f: further schematic illustrations of a path of a single point on the whip of a planetary mixer according to the prior art as shown in Fig. 3, with each point closer to the central axis going from Fig. 4a to Fig. 4f,
- Fig. 5: the theoretical path of a single point at the distal free end of a filament in the device for aerating having an epicyclic gear train if the filament were not impeded by the vessel,
- Fig. 6: a schematic illustration of an aerator comprising a shaft member and two appendages being detachably connected to the shaft member.

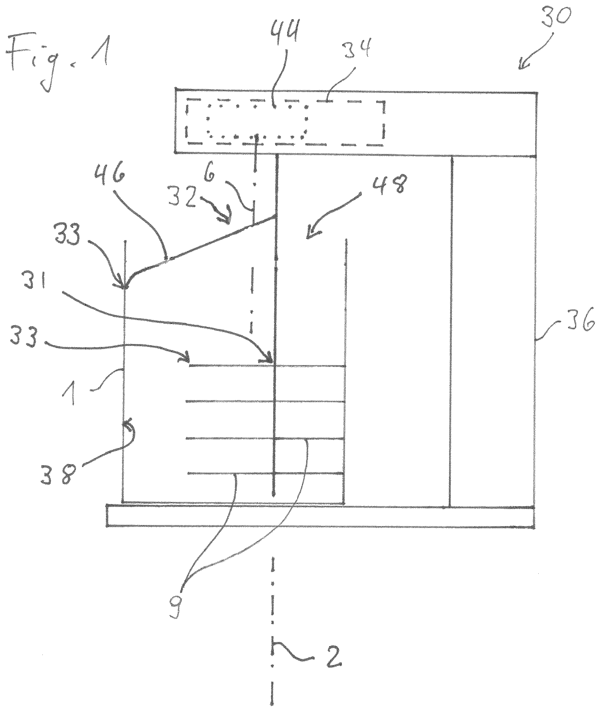

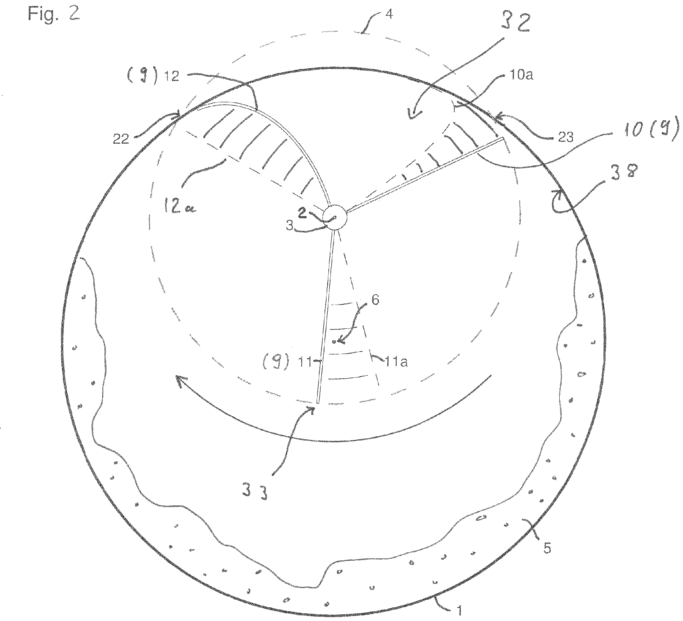

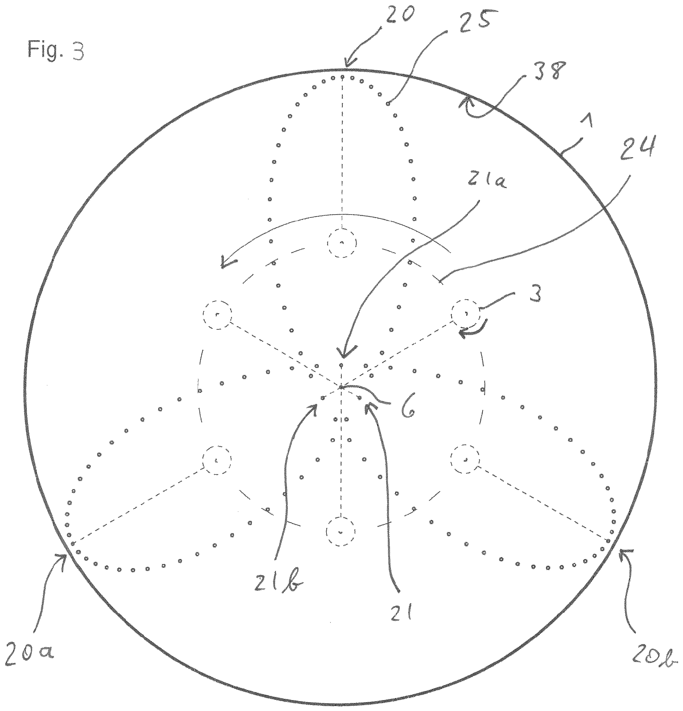

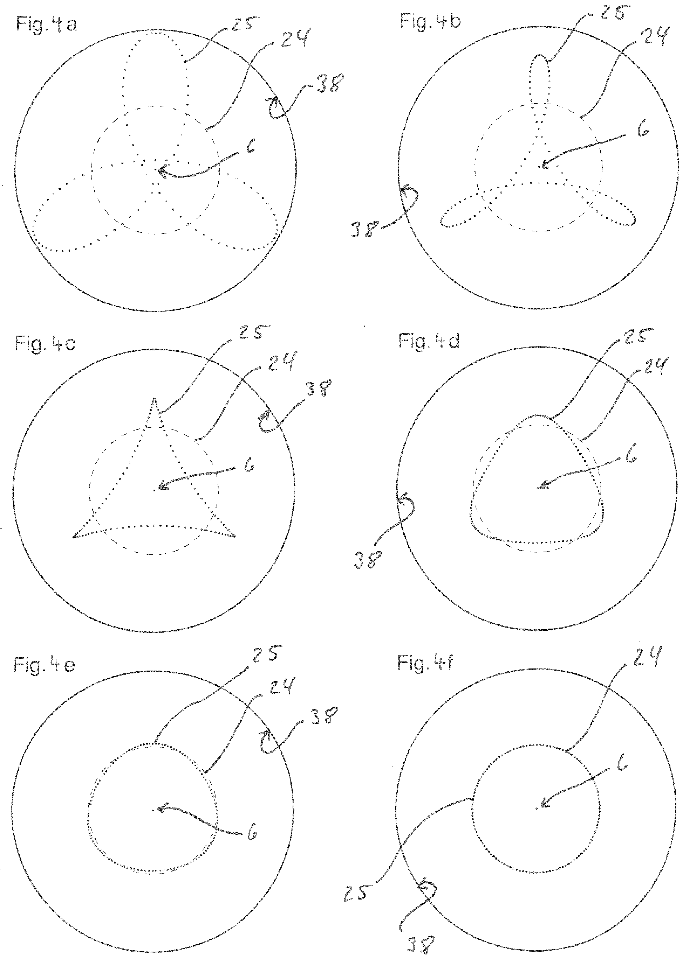

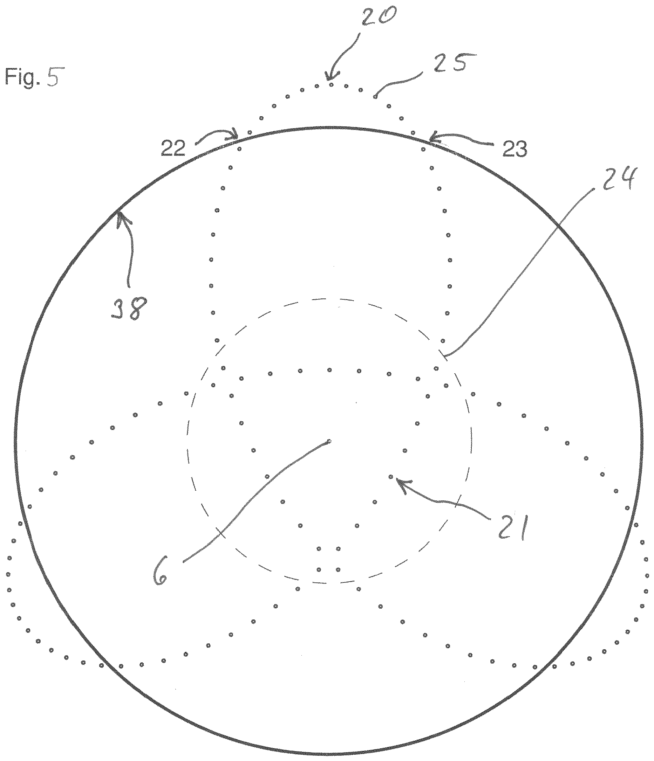

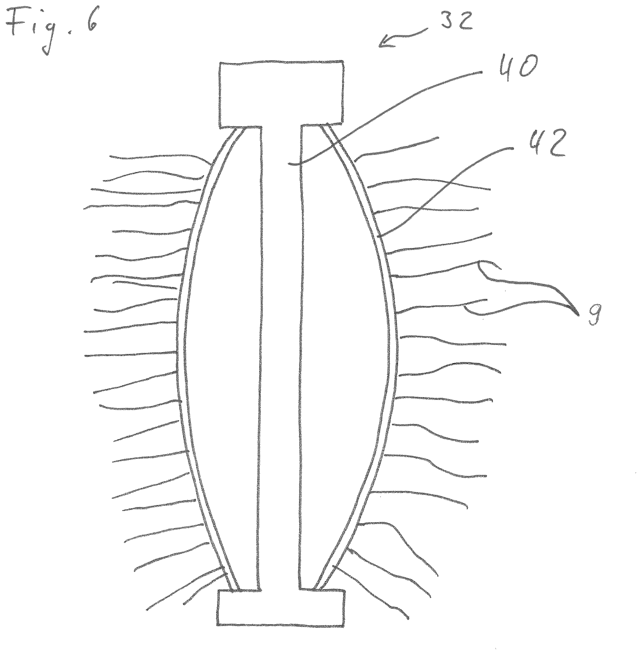

Figs. 1 and 6 depict devices according to embodiments of the invention. Figs. 2 through 5 are all horizontal cross-sectional views of a vessel and demonstrate theoretical principles considered in the context of the invention. The general functioning of the filaments is demonstrated in Fig. 2, whether for fixed-axis or planetary models. Fig. 3 and Fig. 4a-f trace the path of a single point on the whip of any planetary device, whether in this invention or in the prior art. Fig. 5 shows the path of a filament end in a planetary model in order to illuminate some of the particular advantages of this invention when applied in a planetary gear device.

In Fig. 1, there is a simplified schematic side view of a device 30 for aerating a food substance 5. The food substance 5 itself is not displayed in Fig. 1. The device 30 comprises an aerator 32, a vessel 1 in which the food substance 5 is present, a drive unit 34 and a mounting 36. The device 30 can be a movable counter-top device or a stationary device. In another embodiment, the vessel 1 is replaceable and can be temporarily and releasably fixed to the mounting 36. In fixed axis models, i.e. in an embodiment were the aerator 32 rotates about an axis of rotation that has a fixed spatial relationship relative to the inner wall 38 of the vessel 1, the vessel 1 can be attached with its center not co-axial with the aerator shaft 3. If the vessel 1 can rotate, the filaments 9 of the aerator 32 can reach all parts of the inner wall 38.

The aerator 32 comprises a plurality of filaments 9 that are attached to the aerator 32 at their proximal ends 31 and are free at their distal ends 33. The aerator 32 is attachable to the drive unit 34 and rotatable by the drive unit 34 thereby defining an axis of rotation 2. The drive unit is for example an electric motor.

The vessel 1 defines a space for holding the food substance 5. The food substance 5 can be inserted through the upper opening 48. The space is bordered at the sides by an inner wall 38 of the vessel 1. The vessel 1 and the drive unit 34 are attachable to the mounting 36, wherein the mounting 36 defines a spatial relationship between the axis of rotation 2 of the aerator 32 and the inner wall 38 of the vessel 1.

The figures 2, 3, 4a - 4f and 5 show a horizontal cross-section through the vessel 1 of the device 30 in action. In all of these drawings the rotation of the shaft of the aerator 32 is clockwise as is indicated by the arrow in Fig. 2. Furthermore, all of the above mentioned drawings in figures 2, 3, 4a - 4f, 5 are single-plane cross-sections.

In Fig. 2 there is an instantaneous view of a device 30 having a fixed axis of rotation 2 and by way of an example an aerator 32 with three filaments 9 in that plane.

Fig. 2 is an important drawing for understanding the role of the filaments 9 and thus the aspects of this invention. The three filaments 9 are attached to the central shaft assembly 3, which, in this drawing, is a simple shaft rotating in a clockwise direction. Those three filaments 9 are in the same plane orthogonal to the shaft axis 2. During operation each filament 9 comes in contact with the inner wall 38 of the vessel 1 at one point 22 and breaks contact at a later point 23. Filament 11 is moving freely, filament 12 has just come into contact with the inner wall 38, impeding its free motion and bending it into a reversible elastic formation, and filament 10 has just broken contact with the inner wall 38, reverting to its initial state, like the state of filament 11. The free end of filament 12 moves along the inner wall 38, scraping food 5 with it. The food substance 5 at the edge is more liquid than the more aerated part away from the wall 38. This constant scraping of the inner wall 38 produces a more even consistency in the food 5 being aerated.

The dashed lines 10a, 11a, 12a show the position of the filaments 10, 11, 12 just prior to this instantaneous view. When the free end 31 of any filament 9 travels from point 22 to point 23 on the inner wall 38, it will cover a shorter distance than the distance from point 22 to point 23 on the unimpeded path it would have traveled on the path 4 shown by a dashed line.

In a fixed-axis device with a constant angular velocity, the free end 31 of the filament 9 will travel at a constant speed from point 23 to point 22 and then at a reduced speed from point 22 to point 23. In a planetary gear device, the free end 31 of a filament 9 also slows down between point 22 and 23, but the speed during the remaining (largest) part of the arc is not constant.

The elasticity and centrifugal force acting on the filament 9 causes any food accumulated during the scraping of the inner wall 38 from point 22 to point 23 to move towards the distal end 33 and then be flung away. It is this scraping and flinging which causes the aeration of the food 5 to occur more evenly and more rapidly than with known methods or devices.

The axis of rotation 2 of the rotating shaft 3 of the aerator 32 is arranged such that the distal ends 33 of a fraction of the filaments 9 contact the inner wall 38 of the vessel 1. In other words, the aerator 32 and the vessel 1 are arranged in that a theoretical path 4 of the free ends 33 of the filaments 9, if unimpeded, intersects with the inner wall 38 of the vessel 1. This path 4 is indicated in a dashed line.

Every filament 9 defines a first state and a second state. The filament 9 undergoes a reversible elastic deformation when being bent by a transverse force from the first state to the second state. The filament 9 performs a spring-back action from the second state to the first state lowering the spring tension, when the transverse force acting on the filament drops to zero. When the aerator 32 is rotating about its axis of rotation 2 the inner wall 38 bends a fraction of the filaments 9 by applying a transverse force.

The filament 10 has just broken contact with the inner wall 38 of the vessel 1. The point in path where the free end of the filament 10 breaks contact with the inner wall 38 of the vessel 1 is referred 23.

A position of the filament 10 just prior to breaking contact with the inner wall 38 of the vessel 1 is shown in a dashed line and referred to by 10a. The filament 10 performs a spring-back action from the second state 10a to the first state 10 while lowering the spring tension of the filament 10. The filament referred to by 11 is unimpeded by the vessel 1. 11a refers to a position of the filament just prior to the position indicated by 11.

Reference 22 indicates the point in the path where the free end 33 of the filament 12 comes in contact with the inner wall 38 of the vessel 1. Reference 12 is the filament bent or impeded by the vessel 1. At the position 12a, the free end 33 of the filament 9 is shortly before coming into contact with the inner wall 38 of the vessel 1 and the filament 9 is still in the first state. The filament 9 then changes from the first state into the second state which is indicated by 12.

The device performs aeration of the food substance 5. The process of aeration involves incorporating air into a liquid by forming bubbles. Anyone who has played with soap bubbles has undoubtedly observed how a single soap bubble can be divided by slicing through it. If the wall of the bubble is not so thin that it bursts, then there are two new bubbles, each smaller than the original one. The smaller a bubble is, the stronger it is. This phenomenon is crucial to the use of aeration in cooking and baking. Only when the liquid being aerated has very many tiny bubbles fairly evenly distributed throughout can it to hold another substance in suspension.

This phenomenon takes place when heavy cream is made into whipping cream. The bubbles created by a wire whip are large at first and become smaller and smaller as the wires of the whip cut through the mass of cream. The cream becomes increasingly viscous until it is finally solid enough to hold its shape. At that point the bubbles are small enough that the mass can be folded into another food substance to hold that other substance in suspension. If the bubbles are still too large, the bubbles are too weak and the mixture collapses.

In truth, not every bit of food with which the filament comes in contact will cling to it. Some will simply be pushed above or below the line of travel.

The aeration of egg whites is of particular interest because of its wide use in both cooking and baking. This process was important for development of the device 30 according to aspects of the invention because it is one of the most complex and demanding processes performed by a wire whip and one at which this invention excels. Unlike soap bubbles or heavy cream, the fine bubbles rely on more than just the lipids in the liquid to hold the shape of the bubble. The proteins of the egg whites unfold in a process known as denaturation. During the beating proteins create bonds with other unraveled proteins. There is coagulation resulting from some of the amino acids being repelled by water and others attracted to it. In order to achieve this, the egg whites must be beaten at a very high speed.

But if egg whites are beaten too long, they dry out, breaking into chunks, making them unsuitable for folding into a heavy sauce or food mass which they must support. Ideally, they should remain moist and the bubbles should be as small as possible. For this reason it is important to keep the entire mass in motion during the beating, including the egg whites at the side of the vessel, which tend to be more liquid. By constantly scraping the side, the result is more homogenous. Being able to incorporate the smallest possible bubbles very evenly through the mass is one of the crucial objectives of aerating egg whites. Only so are they capable of supporting another substance which is folded into them.

The device 30 optionally comprises a drive unit 34 that maintains the axis of rotation 2 at a fixed predetermined position relative to the drive unit 34 and the mounting 36. In other words the axis of rotation 2 is fixed in relation to the inner wall 38 of the vessel 1. In another embodiment the drive unit 34 comprises an epicyclic gear train 44 causing the axis of rotation 2 to perform a circular movement on a cylinder jacket.

In the following drawings 2, 3, 4a - 4f and 5, a discussion of embodiments having an epicyclic gear train 44 where the aerator 32 performs a planetary motion will be presented. It will be assumed that the ring gear of the epicyclic gear train 44 is fixed, meaning that the aerator 32 rotates in a direction opposite to the shaft 3. For all of the drawings the aerator 32, which is attached to a planet gear, is rotating counter-clockwise from a bird's-eye view, and the shaft 3 of the aerator 32 is rotating clockwise. It could just as easily be the other way around.

The drawings and discussion also have a sun gear to planet gear ratio of -2, the negative number denoting opposite rotation direction. The ratio of teeth on the sun gear to teeth on the planet gear is also kept constant in order to make the principles here more easily understood. The number of apogees in a full revolution of the aerator is always one greater than the absolute value of the sun gear to planet gear ratio. Hence, in all of these examples there are three apogees 20, 20a, 20b, at 12:00, 08:00, and 04:00 o'clock and three perigees 21, 21a, 21b at 10:00, 06:00, and 02:00.

In all of the drawings the radius of the vessel 1 at its widest point is 220 units, the radius of the path of the shaft axis 2 of the aerator 32 is 100 units, leaving a difference of 120 units from the shaft axis 2 to the closest point on the vessel 1.

All of these values are only meant to unify the drawings and explanations, but are not prescriptive or restrictive for any of the embodiments of the invention.

One important aspect needs to be mentioned. In all of the drawings showing planetary paths with planet gear in the opposite direction to the sun gear, there is a significant difference between the linear velocity at the apogee 20, 20a, 20b and the linear velocity at the perigee 21, 21a, 21b. Because all of the dots in the paths in Fig. 3, Fig. 4a - 4f and Fig. 5 have the same angular distance, namely 3°, the time from one dot to the next is constant, assuming an unchanging speed of rotation. But it is very clear from the drawing itself that the distance between two dots is much greater at the perigee 21, 21a, 21b than at the apogee 20, 20a, 20b. This means that the food substance 5 is flung away from that point more vigorously there than when it is closer to the vessel 1, i.e., at the apogee 20, 20a, 20b.

Simply for the sake of unifying the drawings, all of these cross-section figures have a vessel 1 with a radius of 220 arbitrary units, a central shaft with a radius of 10 units with the center of the shaft 100 units away from the center of the vessel 1. These measurements and also these ratios are not meant to imply that these values are in any way restrictive. By using the same values in all drawings it is easier to understand the principles being discussed.

Likewise, the paths of a single point shown at different distances in the planetary mixer models (Fig. 3-5) are based on a ratio of two teeth on the sun gear to one tooth on the planet gear. The ring gear is fixed, which means the shaft rotates in the opposite direction to the aerator 32. This is also not intended to be restrictive. It simply means that all of the paths shown will have three apogees and three perigees always at the same point in the cycle.

In Fig. 3 there is a schematic illustration of the path 25 of a single point on a whip of a planetary mixer according to the prior art. The whip is rotated about a central rotating shaft 3. Because the device comprises an epicyclic gear, the shaft performs a motion on a path 24 defining a cylinder jacket. By way of an example, six positions of the shaft 3 are shown. Furthermore, the central axis 6 of the epicyclic gear is shown. The dots trace the path of a single point on the whip close to the wall of the vessel during one revolution of the epicyclic gear.

The point, at its apogee 20, comes almost to the edge of the inner wall 38 of the vessel 1. The path of the axis of the aerator 32 is referred to by the dashed line 24. The path 25 of the point on the whip being followed intentionally shown as dotted line instead of a dashed line. Each dot marks the position of that point being followed when the aerator 32 (sun pinion) moves 3° counter-clockwise, with the aerator shaft 3 (planet gear) rotating clockwise. There are 120 dots in the path. Because the angular velocity is constant, the time between any two adjacent points is the same. Hence the ratio of the distance between two pairs of adjacent points is inversely proportional to the speed between the two pairs. It is thus obvious that the speed at the apogee is a relative minimum in a cycle and the speed at the perigee is a relative maximum. This means that flinging of food 5 from this point will occur also under prior art.

Figs. 4a to 4f illustrate further paths of a single point on the whip of such a planetary mixer according to the prior art. The point displayed in each of the six paths of Fig. 4a to Fig. 4f moves consecutively closer to the shaft axis 2.

In this series of schematic illustrations of the path of a single point on the whip of a planetary mixer, with each successive drawing depicting a path of a point closer to the shaft axis than in the previous drawing. As the distance of that point being followed gets smaller,
- the entire path becomes smaller,
- the difference between apogee and perigee decreases, and
- the path converges toward a circle, i.e. the path of the axis shaft 24.

Namely, in Figs 4a, 4b, 4c, 4d, 4e, and 4f the point is distanced respectively 115, 75, 45, 15, 5 and 0 units from the shaft axis 3 (the shaft axis is always 120 units from the nearest point to the vessel). When the distance is 0, this is the point at the bottom of a wire loop on a wire whip and the point traces a circle intersecting the cylinder defined by the motion of the shaft axis.

Figs. 4a to 4f show that many points on a classical wire whip travel significantly less distance through the food substance than the point closest to the vessel.

In contrast to this, we see in Fig. 5 that the filaments 9 of the aerator 32 travel through the food substance on a much longer path. In Fig. 5, there is an illustration of a path of a single distal point on a filament 10. Between the point 22 where the free end of filament comes in contact with vessel and the point 23 in path where free end of filament breaks contact with vessel, the theoretical position of the free end is displayed. This is located outside the vessel 1. The dotted line shows the theoretical path if the filament 9 were not impeded by the vessel 1. In fact, between the points 22 and 23 the filament 9 is bent, i.e., deformed from the first state to the second state. At point 23, the filament 9 is released and the spring action is performed. The filament 9 scrapes along the wall 38 of the vessel 1 and flings the food substance 5 away thereby efficiently aerating the food substance 5.

Fig. 5, like Fig. 2, shows the path of the free end 33 of a filament 9 (filament not shown here) if not impeded by the inner wall 38 of the vessel 1. Just as in the planetary paths 25 of Fig. 3 and Fig. 4a-f, any two adjacent dots on the dotted line show the linear positions of the free end 33 when the shaft axis 2 (not shown here) in a planetary system has made a 3° rotation. The difference between the distance from point 22 to point 23 on the inner wall 38 and the distance between those point along the theoretical path, the path of the free end 33 if not impeded by the inner wall 38, is much greater than the difference in those two distances in Fig. 2.

In Fig. 6, there is a schematic illustration of an aerator 32 comprising a shaft member 40 and by way of an example two appendages 42. The appendages 42 are detachably connected to the shaft member 40. The filaments 9 are attached to the appendage 42. The appendages 42 can be replaced if worn out or can be changed if, for example, another type of filament 9 (longer, shorter, stiffer, softer, etc.) shall be used.

Finally, when referring back to Fig. 1, the device 30 can be designed such that the aerator 32 further comprises at least one splash guard filament 46. The splash guard filament 46 is attached to the aerator 32 at the proximal end 31 and is free at the distal end 33. The splash guard filament 46 has a length such that the free end 33 constantly contacts the inner wall 38 when the aerator 32 is rotated about the axis of rotation 2. The splash guard filament 46 is arranged in a direction of the opening 48 of the vessel 1 relative to the remaining filaments 9. The splash guard filament 46 reduces splashing of the food substance 5 through the opening 48. The splash guard filament 46 can be inclined with respect to the axis of rotation 2 that is defined by the rotating shaft 3 of the aerator 32. It is not necessary that the splash guard filament 46 projects orthogonal to the rotating shaft 3. It can point downwards towards the interior of the vessel 1. Furthermore, a part of the splash guard filament 46 can be fairly stiff. This stiff part can almost reach a point which is close to a minimum distance from the rotating shaft 3 to the inner wall 38 of the vessel 1.

### List of References

- 1: vessel
- 2: axis of rotation (central axis of rotating shaft)
- 3: rotating shaft
- 4: path of the free end of filament if not impeded by vessel (dashed line)
- 5: food substance
- 6: central axis of vessel
- 9: filament
- 10: filament having just broken contact with the vessel
- 10a: position of the filament just prior breaking contact with the vessel (just prior to the position indicated by 10)
- 11: filament unimpeded by vessel at free end
- 11a: position of filament just prior to the position indicated by 11
- 12: filament impeded by vessel
- 12a: position of filament just prior to the position indicated by 12
- 20: first apogee in the path of a single point of a whip or filament
- 21: first perigee in the path of a single point of a whip or filament
- 20a: second apogee in the path of a single point of a whip or filament
- 21a: second perigee in the path of a single point of a whip or filament
- 20b: third apogee in the path of a single point of a whip or filament
- 21b: third perigee in the path of a single point of a whip or filament
- 22: point in path where free end of filament comes in contact with vessel
- 23: point in path where free end of filament breaks contact with vessel
- 24: path of aerator axis shaft
- 25: path of single point at a fixed radius from the shaft axis in a planetary system
- 30: device
- 31: proximal end
- 32: aerator
- 33: distal end
- 34: drive unit
- 36: mounting
- 38: inner wall
- 40: shaft member
- 42: appendage
- 44: epicyclic gear train
- 46: splash guard filament
- 48: opening

## Claims

1. A device (30) for aerating a food substance (5), comprising: an aerator (32), a vessel (1), a drive unit (34) and a mounting (36), wherein
the aerator (32) comprises a plurality of filaments (9),
- the filaments (9) being attached to the aerator (32) at their proximal ends (31) and being free at their distal ends (33), every filament (9) having a first state and a second state, wherein the filament (9) undergoes a reversible elastic deformation when being bent by a transverse force from the first state to the second state and wherein the filament (9) performs a spring-back action from the second state to the first state, lowering the spring tension, when the transverse force acting on the filament drops to zero,
- the aerator (32) is attachable to the drive unit (34) and rotatable by the drive unit (34) thereby defining an axis of rotation (2),
- the vessel (1) defines a space for holding the food substance (5), the space being bordered at the sides by an inner wall (38) of the vessel (1),
- the vessel (1) and the drive unit (34) are attachable to the mounting (36), wherein the mounting (36) defines a spatial relationship between the axis of rotation (2) and the inner wall (38) of the vessel (1) such that the distal ends (33) of a fraction of the filaments (9) contact the inner wall (38) of the vessel (1), wherein the inner wall (38) bends the fraction of the filaments (9) by applying the transverse force.

2. The device (30) according to claim 1, wherein the aerator (32) comprises a shaft member (40) and at least one appendage (42) being detachably connected to the shaft member (40), the filaments (9) being attached to the appendage (42).

3. The device (30) according to claim 1 or 2, wherein the drive unit (34) maintains the axis of rotation (2) at a fixed position relative to the drive unit (34) and, in particular, the mounting (36) maintains the vessel (1) and the drive unit (34) in a fixed spatial relationship thereby maintaining the axis of rotation (2) fixed in relation to the inner wall (38) of the vessel (1).

4. The device (30) according to claim 1 or 2, wherein the drive unit (34) comprises an epicyclic gear train (44) causing the axis of rotation (2) to perform a circular movement on a cylinder jacket.

5. The device (30) according to any of the preceding claims, wherein the aerator (32) further comprises at least one splash guard filament (46) being attached to the aerator (32) at the proximal end (31) and being free at the distal end (33), the splash guard filament (46) having a length such that the free end (33) constantly contacts the inner wall (38) when the aerator (32) is rotated about the axis of rotation (2) and wherein the splash guard filament (46) is arranged closer to an opening (48) of the vessel (1) in comparison to the filaments (9) of the aerator (32) thereby reducing splashing of the food substance (5) through the opening (48).

6. A method for aerating a food substance (5) in a vessel (1) defining a space for holding the food substance (5), the space being bordered at the sides by an inner wall (38) of the vessel (1), wherein
- an aerator (32) being attached to a drive unit (34) is rotated by the drive unit (34) about an axis of rotation (2),
- the aerator (32) comprising a plurality of filaments (9), the filaments (9) being attached to the aerator (32) at their proximal ends (31) and being free at their distal ends (33), every filament (9) having a first state and a second state, wherein the filament (9) undergoes a reversible elastic deformation when being bent by a transverse force from the first state to the second state and wherein the filament (9) performs a spring-back action from the second state to the first state lowering the spring tension, when the transverse force acting on the filament (9) drops to zero,
- the distal ends (33) of the filaments (9) temporarily contact the inner wall (38) of the vessel (1) during one rotation of the aerator (32) about the axis of rotation (2),
wherein during every rotation of the aerator (32),
- the distal end (33) of every filament (9) contacts the inner wall (38) at a first rotational position of the aerator (32), on further rotation of the aerator (32), the inner wall (38) applies the transverse force on the filament (9) and bends the filament (9) from the first state to the second state by reversible elastic deformation, the distal end (33) of the filament (9) scrapes along the inner wall (38) of the vessel (1) and at a second point of rotation, the transverse force applied by the inner wall (38) on the filament (9) drops to zero and the filament (9) performs a spring-back action from the second state to the first state, lowering the spring tension.

7. The method according to claim 6, wherein the aerator (32) rotates about an axis of rotation (2) that has a fixed spatial relationship relative to the inner wall (38) of the vessel (1).

8. The method according to claim 6, wherein the aerator (32) rotates about an axis of rotation (2) performing a circular movement on a cylinder jacket.

9. The method according to any of claims 6 to 8, wherein the aerator (32) further comprises at least one splash guard filament (46) being attached to the aerator (32) at the proximal end (31) and being free at the distal end (33), wherein the free end (33) of the splash guard filament (46) constantly contacts the inner wall (38) when the aerator (32) is rotated about the axis of rotation (2).

## Patentansprüche

1. Vorrichtung (30) zum Zuführen von Luft zu einer Lebensmittelsubstanz (5), umfassend: einen Belüfter (32), ein Gefäß (1), eine Antriebseinheit (34) und eine Halterung (36), wobei
der Belüfter (32) eine Vielzahl von Filamenten (9) umfasst,
- wobei die Filamente (9) an ihren proximalen Enden (31) an dem Belüfter (32) angebracht sind und an ihren distalen Enden (33) frei sind, wobei jedes Filament (9) einen ersten Zustand und einen zweiten Zustand aufweist, wobei das Filament (9) eine reversible elastische Verformung erfährt, wenn es durch eine Querkraft aus dem ersten Zustand in den zweiten Zustand gebogen wird, und wobei das Filament (9) aus dem zweiten Zustand in den ersten Zustand zurückfedert, was die Federspannung absenkt, wenn die Querkraft, die auf das Filament wirkt, auf null abfällt,
- wobei der Belüfter (32) an der Antriebseinheit (34) anbringbar und von der Antriebseinheit (34) drehbar ist, wodurch eine Drehachse (2) definiert wird,
- wobei das Gefäß (1) einen Raum zum Aufnehmen der Lebensmittelsubstanz (5) definiert, wobei der Raum an den Seiten an eine Innenwand (38) des Gefäßes (1) angrenzt,
- wobei das Gefäß (1) und die Antriebseinheit (34) an der Halterung (36) anbringbar sind, wobei die Halterung (36) eine räumliche Beziehung zwischen der Drehachse (2) und der Innenwand (38) des Gefäßes (1) definiert, sodass die distalen Enden (33) eines Anteils der Filamente (9) die Innenwand (38) des Gefäßes (1) berühren, wobei die Innenwand (38), indem sie die Querkraft ausübt, den Anteil der Filamente (9) biegt.

2. Vorrichtung (30) nach Anspruch 1, wobei der Belüfter (32) ein Wellenelement (40) und mindestens einen Ansatz (42) umfasst, der lösbar mit dem Wellenelement (40) verbunden ist, wobei die Filamente (9) an dem Ansatz (42) angebracht sind.

3. Vorrichtung (30) nach Anspruch 1 oder 2, wobei die Antriebseinheit (34) die Drehachse (2) in einer festen Position in Bezug auf die Antriebseinheit (34) hält, und insbesondere die Halterung (36) das Gefäß (1) und die Antriebseinheit (34) in einer festen räumlichen Beziehung hält, wodurch die Drehachse (2) fest in Beziehung zu der Innenwand (38) des Gefäßes (1) gehalten wird.

4. Vorrichtung (30) nach Anspruch 1 oder 2, wobei die Antriebseinheit (34) einen Umlaufgetriebestrang (44) umfasst, der die Drehachse (2) dazu veranlasst, eine Drehbewegung auf einem Zylindermantel auszuführen.

5. Vorrichtung (30) nach einem der vorhergehenden Ansprüche, wobei der Belüfter (32) ferner mindestens ein Spritzschutzfilament (46) umfasst, das an dem proximalen Ende (31) an dem Belüfter (32) angebracht ist und an dem distalen Ende (33) frei ist, wobei das Spritzschutzfilament (46) eine derartige Länge aufweist, dass das freie Ende (33) durchgängig die Innenwand (38) berührt, wenn der Belüfter (32) um die Drehachse (2) gedreht wird, und wobei das Spritzschutzfilament (46) im Vergleich zu den Filamenten (9) des Belüfters (32) näher an einer Öffnung (48) des Gefäßes (1) angeordnet ist, wodurch ein Spritzen der Lebensmittelsubstanz (5) durch die Öffnung (48) verringert wird.

6. Verfahren zum Zuführen von Luft zu einer Lebensmittelsubstanz (5) in einem Gefäß (1), das einen Raum zum Aufnehmen der Lebensmittelsubstanz (5) definiert, wobei der Raum an den Seiten an eine Innenwand (38) des Gefäßes (1) angrenzt, wobei
- ein Belüfter (32), der an einer Antriebseinheit (34) angebracht ist, von der Antriebseinheit (34) um eine Drehachse (2) gedreht wird,
- der Belüfter (32) eine Vielzahl von Filamenten (9) umfasst, wobei die Filamente (9) an ihren proximalen Enden (31) an dem Belüfter (32) angebracht sind und an ihren distalen Enden (33) frei sind, wobei jedes Filament (9) einen ersten Zustand und einen zweiten Zustand aufweist, wobei das Filament (9) eine reversible elastische Verformung erfährt, wenn es durch eine Querkraft aus dem ersten Zustand in den zweiten Zustand gebogen wird, und wobei das Filament (9) aus dem zweiten Zustand in den ersten Zustand zurückfedert, was die Federspannung absenkt, wenn die Querkraft, die auf das Filament (9) wirkt, auf null abfällt,
- die distalen Enden (33) der Filamente (9) während einer Drehung des Belüfters (32) um die Drehachse (2) vorübergehend die Innenwand (38) des Gefäßes (1) berühren,
wobei während jeder Drehung des Belüfters (32)
- das distale Ende (33) jedes Filaments (9) die Innenwand (38) an einer ersten Drehposition des Belüfters (32) berührt, bei weiterer Drehung des Belüfters (32) die Innenwand (38) die Querkraft auf das Filament (9) ausübt und das Filament (9) durch reversible elastische Verformung aus dem ersten Zustand in den zweiten Zustand biegt, das distale Ende (33) des Filaments (9) entlang der Innenwand (38) des Gefäßes (1) schabt und an einem zweiten Drehpunkt die Querkraft, die von der Innenwand (38) auf das Filament (9) aufgebracht wird, auf null abfällt und das Filament aus dem zweiten Zustand in den ersten Zustand zurückfedert, was die Federspannung absenkt.

7. Verfahren nach Anspruch 6, wobei der Belüfter (32) sich um eine Drehachse (2) dreht, die eine feste räumliche Beziehung relativ zu der der Innenwand (38) des Gefäßes (1) aufweist.

8. Verfahren nach Anspruch 6, wobei der Belüfter (32) sich um eine Drehachse (2) dreht, die eine kreisförmige Bewegung auf einem Zylindermantel ausführt.

9. Verfahren nach einem der Ansprüche 6 bis 8, wobei der Belüfter (32) ferner mindestens ein Spritzschutzfilament (46) umfasst, das an dem proximalen Ende (31) an dem Belüfter (32) angebracht ist und an dem distalen Ende (33) frei ist, wobei das freie Ende (33) des Spritzschutzfilaments (46) durchgängig die Innenwand (38) berührt, wenn der Belüfter (32) um die Drehachse (2) gedreht wird.

## Revendications

1. Un dispositif (30) pour aérer une substance alimentaire (5), comprenant :
un aérateur (32), un récipient (1), une unité d'entraînement (34) et un support (36), dans lequel
l'aérateur (32) comprend une pluralité de filaments (9),
- les filaments (9) étant fixés à l'aérateur (32) par leurs extrémités proximales (31) et étant libres à leurs extrémités distales (33), chaque filament (9) ayant un premier état et un deuxième état, le filament (9) subissant une déformation élastique réversible lorsqu'il est plié par une force transversale depuis le premier état jusqu'au deuxième état et le filament (9) effectuant une action de retour élastique depuis le deuxième état jusqu'au premier état, réduisant la tension élastique, lorsque la force transversale agissant sur le filament tombe à zéro,
- l'aérateur (32) est apte à être fixé à l'unité d'entraînement (34) et à être entraîné en rotation par l'unité d'entraînement (34), définissant ainsi un axe de rotation (2),
- le récipient (1) définit un espace pour contenir la substance alimentaire (5), l'espace étant bordé sur les côtés par une paroi interne (38) du récipient (1),
- le récipient (1) et l'unité d'entraînement (34) sont aptes à être fixés au support (36), le support (36) définissant une relation spatiale entre l'axe de rotation (2) et la paroi interne (38) du récipient (1) de telle sorte que les extrémités distales (33) d'une fraction des filaments (9) entrent en contact avec la paroi interne (38) du récipient (1), la paroi interne (38) pliant la fraction des filaments (9) en appliquant la force transversale.

2. Le dispositif (30) selon la revendication 1, dans lequel l'aérateur (32) comprend un organe (40) formant arbre et au moins un appendice (42) relié de manière détachable à l'organe (40) formant arbre, les filaments (9) étant fixés à l'appendice (42).

3. Le dispositif (30) selon la revendication 1 ou la revendication 2, dans lequel l'unité d'entraînement (34) maintient l'axe de rotation (2) en une position fixe par rapport à l'unité d'entraînement (34) et, en particulier, le support (36) maintient le récipient (1) et l'unité d'entraînement (34) dans une relation spatiale fixe, maintenant ainsi l'axe de rotation (2) fixe par rapport à la paroi interne (38) du récipient (1).

4. Le dispositif (30) selon la revendication 1 ou la revendication 2, dans lequel l'unité d'entraînement (34) comprend un train d'engrenages épicycloïdal (44) amenant l'axe de rotation (2) à effectuer un mouvement circulaire sur une chemise de cylindre.

5. Le dispositif (30) selon l'une quelconque des revendications précédentes, dans lequel l'aérateur (32) comprend en outre au moins un filament anti-éclaboussures (46), fixé à l'aérateur (32) à l'extrémité proximale (31) et libre à l'extrémité distale (33), le filament anti-éclaboussures (46) ayant une longueur telle que l'extrémité libre (33) est constamment en contact avec la paroi interne (38) lorsque l'aérateur (32) tourne autour de l'axe de rotation (2) et le filament anti-éclaboussures (46) étant agencé plus près d'une ouverture (48) du récipient (1) par rapport aux filaments (9) de l'aérateur (32), réduisant ainsi les éclaboussures de la substance alimentaire (5) à travers l'ouverture (48).

6. Un procédé d'aération d'une substance alimentaire (5) dans un récipient (1) définissant un espace pour contenir la substance alimentaire (5), l'espace étant bordé sur les côtés par une paroi interne (38) du récipient (1)., dans lequel
- un aérateur (32) fixé à une unité d'entraînement (34) est entraîné en rotation par l'unité d'entraînement (34) autour d'un axe de rotation (2),
- l'aérateur (32) comprend une pluralité de filaments (9), les filaments (9) étant fixés à l'aérateur (32) à leurs extrémités proximales (31) et étant libres à leurs extrémités distales (33), chaque filament (9) ayant un premier état et un deuxième état, le filament (9) subissant une déformation élastique réversible lorsqu'il est plié par une force transversale depuis le premier état jusqu'au deuxième état et le filament (9) effectuant une action de retour élastique depuis le deuxième état jusqu'au premier état, abaissant la tension élastique, lorsque la force transversale agissant sur le filament (9) tombe à zéro,
- les extrémités distales (33) des filaments (9) sont temporairement en contact avec la paroi interne (38) du récipient (1) lors d'une rotation de l'aérateur (32) autour de l'axe de rotation (2) ;
durant chaque rotation de l'aérateur (32),
- l'extrémité distale (33) de chaque filament (9) est en contact avec la paroi interne (38) à une première position de rotation de l'aérateur (32), lors d'une rotation supplémentaire de l'aérateur (32), la paroi interne (38) applique la force transversale sur le filament (9) et plie le filament (9) depuis le premier état jusqu'au deuxième état par déformation élastique réversible, l'extrémité distale (33) du filament (9) racle le long de la paroi interne (38) du récipient (1) et, à un deuxième point de rotation, la force transversale appliquée par la paroi interne (38) sur le filament (9) tombe à zéro et le filament (9) effectue une action de retour élastique à partir depuis le deuxième état jusqu'au premier état, abaissant la tension élastique.

7. Le procédé selon la revendication 6, dans lequel l'aérateur (32) tourne autour d'un axe de rotation (2) qui a une relation spatiale fixe par rapport à la paroi interne (38) du récipient (1).

8. Le procédé selon la revendication 6, dans lequel l'aérateur (32) tourne autour d'un axe de rotation (2) accomplissant un mouvement circulaire sur une chemise de cylindre.

9. Le procédé selon l'une quelconque des revendications 6 à 8, dans lequel l'aérateur (32) comprend en outre au moins un filament anti-éclaboussures (46) fixé à l'aérateur (32) à l'extrémité proximale (31) et étant libre au niveau de l'extrémité distale (33), l'extrémité libre (33) du filament anti-éclaboussures (46) étant constamment en contact avec la paroi interne (38) lorsque l'aérateur (32) tourne autour de l'axe de rotation (2).
